# EUROPÄISCHE PATENTANMELDUNG

(11) **EP 4 545 612 A1**
(43) Veröffentlichungstag der Anmeldung: **30.04.2025**
(21) Anmeldenummer: 23206193.7
(22) Anmeldetag: 26.10.2023
(51) Int. Cl.: C09D 17/00

(54) **PIGMENTPASTE UND IHRE VERWENDUNG**

(71) Anmelder: EWALD DÖRKEN AG, 58313 Herdecke (DE)
(72) Erfinder: Lischeid, Jan, 58313 Herdecke (DE); Krupp, Marc, 58313 Herdecke (DE); Miri, Daniel, 58313 Herdecke (DE); Schmitz, Justine, 58313 Herdecke (DE); Matthée, Peter, 58313 Herdecke (DE); Roth, Marcel, 58313 Herdecke (DE); Zimny, Torsten, 58313 Herdecke (DE)
(74) Vertreter: Freiherr von Foullon, Alexander

(57) **Zusammenfassung**

Die vorliegende Erfindung betrifft eine wässrige Zusammensetzung, insbesondere eine Pigmentpaste für ein Abtönsystem, mit einem a_{w}-Wert von weniger als 0,95 und ihre Verwendung.

## Beschreibung

Die vorliegende Erfindung betrifft das technische Gebiet der Oberflächenbeschichtung.

Insbesondere betrifft die vorliegende Erfindung eine wässrige Zusammensetzung, insbesondere eine Pigmentpaste, zur Einarbeitung in Farben und Lacke.

Weiterhin betriff die vorliegende Erfindung die Verwendung einer Pigmentpaste in Oberflächenbeschichtungssystemen, insbesondere Anstrichmitteln.

Weiterhin betrifft die vorliegende Erfindung ein Kit-of-Parts zur Herstellung eines Anstrichmittels.

Moderne Beschichtungssysteme, insbesondere Anstrichmittel, werden zunehmend auf Wasserbasis formuliert, da sie nach Möglichkeit frei von flüchtigen organischen Verbindungen, d.h. VOC-frei (volatile organic compound), sein sollen. Derartige VOC-freie Anstrichmittelsysteme bzw. Systeme mit einem Gehalt von weniger als 1 g/l an VOC gelten als lösemittel- und emissionsfrei. Sie sind unter Gesichtspunkten des Umwelt- und Gesundheitsschutzes nicht oder zumindest weniger problematisch als lösemittelbasierte Systeme.

Darüber hinaus gibt es Bestrebungen, den Einsatz von Konservierungsmitteln und Bioziden in Anstrichmitteln zu vermeiden, zumindest jedoch zu reduzieren. Wenn die Anstrichmittelsysteme keine Konservierungsmittel oder Biozide enthalten, müssen in der Regel keine Gefahrstoffe ausgewiesen werden und die Anstrichmittel sind arbeitsschutztechnisch problemlos und ohne besondere Sicherheitsvorkehrungen anwend- und verarbeitbar.

Die Verwendung wässriger Systeme, insbesondere in Kombination mit organischen Bindemittelsystemen, führt in der Praxis regelmäßig zu einem raschen Befall der Anstrichmittel mit Keimen, insbesondere mit Bakterien, Hefen oder auch mit Schimmel, so dass den Anstrichmitteln in der Regel Konservierungsmittel und/oder Biozide beigemischt werden müssen. Dies gilt speziell für wässrige Pigmentpasten, wie sie insbesondere für Abtönsysteme eingesetzt werden. Um eine Vielzahl unterschiedlicher Farben und Farbschattierungen bereitzustellen, welche von Kunden individuell ausgewählt und zusammengestellt werden können, werden in der Regel Abtönsysteme verwendet. Abtönsysteme bestehen üblicherweise aus einer Palette von farbigen Pigmentpasten, welche mit einem Bindemittel bzw. einer Bindemittelmischung, der sogenannten Abtönbasis oder Basiszusammensetzung, gemischt werden, um Anstrichmittel, insbesondere Wandfarben, mit einem gewünschten Farbton zu erhalten. Bei den Pigmentpasten handelt es sich dabei um hochkonzentrierte pigmenthaltige Dispersionen. Die Pigmentpaste und die Base bzw. Abtönbasis ergeben zusammen dann die anwendungsfertige Farbe bzw. das anwendungsfertige Anstrichmittel.

Das Vermischen einzelner Pigmentpasten in variierenden Mengen mit der Abtönbasis erfolgt in Maschinen, in welchen der Mischvorgang softwareunterstützt durchgeführt wird. Die Pigmentpasten werden dabei mehrere Wochen, nachdem sie aus dem Originalgebinde entnommen wurden, mehr oder weniger offen gelagert und sind in dieser Zeit über die Umgebungsluft Keimen, insbesondere Bakterien, Hefen und Schimmelsporen, ausgesetzt, was bei lösemittelfreien bzw. wasserbasierten Systemen nahezu zwangsläufig zu einem Befall mit Bakterien, Hefen oder Schimmel führt.

Aus diesem Grund werden in wässrigen Pigmentpasten und Abtönsystemen nahezu ausschließlich Konservierungsmittel und Biozide eingesetzt. Der Einsatz von Bioziden und Konservierungsmitteln ist jedoch aus einer Vielzahl von Gründen nachteilig, da Biozide und Konservierungsmittel in der Regel sowohl für den Gesundheitsschutz als auch für den Umweltschutz problematische Substanzen darstellen, deren Verwendung minimiert werden sollte und deren Einsatz durch eine verschärftere Chemikaliengesetzgebung stets strenger reglementiert wird. Darüber hinaus ist ein gravierender Nachteil herkömmlicher organischer Biozide deren Dampfdruck: die Biozide gehen in die Gasphase über und können z.B. Allergien auslösen, wobei insbesondere auch die Gefahr einer Anreicherung der Biozide in der Luft von Innenräumen besteht. Weiterhin sind organische Biozide üblicherweise nicht langzeitstabil und werden z. B. durch UV-Strahlung zersetzt.

Es gibt daher Versuche, auch wässrige Pigmentpasten, insbesondere für Abtönsysteme, ohne Konservierungsmittel oder Biozide bereitzustellen. Hierzu wird üblicherweise der pH-Wert der Pigmentpaste auf einen Wert von 10 oder höher eingestellt, wodurch ein Milieu geschaffen wird, in welchem viele Bakterien und Hefen sowie auch die Mehrzahl der Pilze nicht wachsen können.

Es zeigt sich jedoch bei zunehmendem Einsatz dieser Systeme, dass es eine große Anzahl von alkaliphilen Bakterien, Hefen und Pilzen, insbesondere Schimmelpilzen, existiert, die entweder unter diesen alkalischen Bedingungen gut wachsen oder sich mit Erfolg an diese Bedingungen anpassen können. Um diese alkaliphilen Keime dann zu bekämpfen müssen wiederum Konservierungsmittel und Biozide eingesetzt werden.

Gemein ist allen lebenden Organismen, insbesondere auch Bakterien, Hefen und Schimmelpilzen, dass sie für ihren Stoffwechsel und somit auch für ihr Wachstum Wasser benötigen. Gerade wässrige Pigmentpasten sowie Farben und Lacke besitzen einen hohen Wasseranteil, so dass die Mikroorganismen hier gute Wachstumsbedingungen vorfinden, insbesondere wenn die Paste bzw. die Farbe oder der Lack organische Verbindungen aufweist. So besitzen beispielsweise herkömmliche flüssige Pigmentpräparationen für den Einsatz in Anstrichfarben, welche in den Richtlinien des blauen Engels nach RAL DE Z 102 entsprechen, einen hohen Gehalt an aktivem Wasser im Bereich von 0,95 bis 0,99.

Der Gehalt an aktivem Wasser wird durch die Wasseraktivität, auch a_{w}-Wert genannt, angegeben. Der a_{w}-Wert berechnet sich aus dem Quotient des Wasserdampfdrucks über dem Prüfgut und dem Wasserdampfdruck über reinem Wasser bei einer bestimmten Temperatur und kann folglich Werte von 0 bis 1 annehmen. Der a_{w}-Wert wird bestimmt durch Messungen der relativen Feuchtigkeit (relative humidity, RH) in der Luft über einer Probe. Die relative Luftfeuchtigkeit wird üblicherweise mittels resistiver elektrolytischer Messzelle, kapazitiver Zelle oder der Taupunktspiegel-Methode gemessen.

Unterhalb eines a_{w}-Werts von 0,9 sind Bakterien üblicherweise nicht mehr lebens- und vermehrungsfähig. Unterhalb eines a_{w}-Werts von ca. 0,78 sind Hefepilze nicht mehr vermehrungsfähig und unterhalb eines a_{w}-Werts von 0,6 sind auch Schimmelpilze nicht mehr vermehrungsfähig. Problematisch ist es jedoch, den a_{w}-Wert von wässrigen Pigmentpräparationen auf Werte unter 0,95 einzustellen, da dies die Rheologieeigenschaften, die Viskosität, das Fließverhalten, das Dosierverhalten, die Antrocknung und die Coloristik der Pigmentpräparation entscheidend verändert.

Darüber hinaus ist eine Reihe von Naturstoffen und Metallverbindungen bekannt, die antimikrobielle Eigenschaften aufweisen, ohne jedoch als Biozide gemäß EU-Biozidverordnung oder als Konservierungsmittel eingestuft zu sein. Diese Stoffe können üblicherweise jedoch nicht in Produkten als Schutz vor Mikroorganismen eingesetzt werden, da sie zumeist nicht wirksam genug sind.

Es fehlt somit im Stand der Technik weiterhin an einer Möglichkeit, wässrige Pigmentpasten bzw. Pigmentpräparationen gegen den Befall mit Mikroorganismen, insbesondere Hefepilzen und Schimmelpilzen zu schützen. Darüber hinaus fehlt es im Stand der Technik weiterhin auch an wässrig basierten Beschichtungsmitteln, insbesondere Anstrichmitteln, sowie wässrig basierten Pigmentpasten, welche konservierungsmittelfrei und biozidfrei formuliert werden können, eine lange offene Zeit besitzen und resistent gegen Befall mit Mikroorganismen, insbesondere Bakterien, Hefen oder Schimmel sind.

Eine Aufgabe der vorliegenden Erfindung ist folglich darin zu sehen, die im zuvor geschilderten Stand der Technik verknüpften Nachteile zu vermeiden, zumindest jedoch abzuschwächen.

Insbesondere ist eine Aufgabe der vorliegenden Erfindung darin zu sehen, eine Pigmentpaste bereitzustellen, welche lösemittelfrei bzw. VOC- und SVOC-frei ist und die gleichzeitig frei ist von Bioziden und Konservierungsmitteln, insbesondere frei von flüchtigen Bioziden und Konservierungsmitteln.

Weiterhin ist eine Aufgabe der vorliegenden Erfindung darin zu sehen, eine Pigmentpaste bereitzustellen, welche auch gegenüber alkaliphilen Bakterien, Hefen und Schimmelpilzen resistent ist.

Eine weitere Aufgabe der vorliegenden Erfindung ist darin zu sehen, ein Abtönsystem bereitzustellen, welches eine einfache Abtönung einer Vielzahl wässriger, aber auch lösemittelhaltiger, insbesondere unpolarer lösemittelhaltiger, oder 100 % feststoffhaltiger Bindemittelsysteme ermöglicht.

Insbesondere ist hierbei eine Aufgabe der vorliegenden Erfindung darin zu sehen, ein pigmentbasiertes Additiv bereitzustellen, welches die Coloristik von Anstrichmitteln nicht beeinträchtigt.

Gegenstand der vorliegenden Erfindung gemäß einem ersten Aspekt der vorliegenden Erfindung ist somit eine wässrige Zusammensetzung gemäß Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung gemäß einem zweiten Aspekt der vorliegenden Erfindung ist die Verwendung der erfindungsgemäßen wässrigen Zusammensetzung nach Anspruch 16.

Wiederum weiterer Gegenstand der vorliegenden Erfindung gemäß einem dritten Aspekt der vorliegenden Erfindung ist ein Kit-of-Parts gemäß Anspruch 17; weitere, vorteilhafte Ausgestaltungen dieses Erfindungsaspekts sind Gegenstand des diesbezüglichen Unteranspruchs.

Wiederum weiterer Gegenstand der vorliegenden Erfindung gemäß einem vierten Aspekt der vorliegenden Erfindung ist eine Zusammensetzung nach Anspruch 19; weitere, vorteilhafte Ausgestaltungen dieses Erfindungsaspekts sind Gegenstand des diesbezüglichen Unteranspruchs.

Es versteht sich von selbst, dass Besonderheiten, Merkmale, Ausgestaltungen und Ausführungsformen sowie Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekt entsprechend gelten, ohne dass es einer ausdrücklichen Erwähnung bedarf.

Zudem gilt, dass bei allen nachstehend genannten relativen bzw. prozentualen, insbesondere gewichtsbezogenen Mengenangaben zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.-% resultieren. Dies versteht sich für den Fachmann aber von selbst.

Zudem gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt, wird nachfolgend der Gegenstand der vorliegenden Erfindung näher erläutert.

Gegenstand der vorliegenden Erfindung - gemäß einem **ersten** Aspekt der vorliegenden Erfindung - ist somit eine wässrige Zusammensetzung, insbesondere eine Pigmentpaste für ein Abtönsystem, wobei die wässrige Zusammensetzung einen a_{w}-Wert von weniger als 0,95 aufweist.

Wie die Anmelderin überraschenderweise herausgefunden hat, lässt sich durch die kontrollierte Einstellung des "freien" Wassers, d.h. der Wasseraktivität bzw. des a_{w}-Werts, die Lebensgrundlage von insbesondere Bakterien, Hefepilzen und Schimmelpilzen so weit einzuschränken, dass diese sich nicht mehr vermehren können. Auf diese Weise kann ein einfacher Schutz von wässrigen Zusammensetzungen, wie Pigmentpasten, vor einem Befall mit Mikroorganismen erfolgen.

Ein besonderer Vorteil der erfindungsgemäßen Zusammensetzung ist insbesondere die gezielte Einstellung und Kontrolle des a_{w}-Werts, da sich die Mikroorganismen nicht oder nur bedingt an "Wasserknappheit" anpassen können. Bakterien benötigen üblicherweise einen freien Wassergehalt bzw. einen a_{w}-Wert von 0,90 oder höher, um wachsen zu können. Hefepilze benötigen einen a_{w}-Wert von mindestens 0,78, um wachsen zu können und für Schimmelpilze liegt der a_{w}-Wert bei mindestens 0,6.

Auch bei höheren a_{w}-Werten, beispielsweise bis zu einem a_{w}-Wert von 0,95, ist die Stoffwechselrate von Mikroorganismen - und zwar sowohl von Bakterien als auch von Hefen und Schimmelpilzen - so weit herabgesetzt, dass ihr Wachstum durch Zusatz von weiteren wachstumshemmenden Substanzen, wie beispielsweise zwei- und dreiwertigen Metallionen oder auch Naturstoffen, welche nicht als bakterizid bzw. biozid gemäß EU-Biozidverordnung eingestuft werden, nochmals soweit reduziert wird, dass insgesamt ein Wachstum der Mikroorganismen effektiv verhindert werden kann und die Zusammensetzung, insbesondere Pigmentpaste, in der Folge keimfrei bleibt.

Die vorliegende Erfindung ermöglicht somit auch eine Zurverfügungstellung von wässrigen Pigmentpräparationen mit einem sehr viel geringeren Gehalt an Bioziden als Pigmentpräparationen des Standes der Technik und insbesondere auch von vollkommen biozidfreien Pigmentpräparationen, die trotzdem effektiv vor einem Befall mit Mikroorganismen, insbesondere Bakterien, Hefen und Schimmelpilzen geschützt sind.

Gleichfalls hat sich überraschender Weise gezeigt, dass es auch bei einer Senkung des a_{w}-Werts auf Werte von unter 0,95 möglich ist, Pigmentpasten zu erhalten, welche keinerlei qualitative Einbußen hinsichtlich Rheologie, Fließverhalten, Dosierverhalten, Antrocknen und Coloristik im Vergleich zu herkömmlichen Pigmentpräparationen aufweisen.

Herkömmliche Pigmentpräparationen besitzen, wie zuvor bereits ausgeführt, einen Gehalt an aktivem Wasser (a_{w}-Wert) im Bereich von 0,95 bis 0,99.

Der a_{w}-Wert - wie gleichfalls zuvor schon ausgeführt - ist der Quotient aus dem Dampfdruck von Wasser über einem Prüfgut und dem Wasserdampfdruck über reinem Wasser bei einer gegebenen Temperatur, üblicherweise 20 °C, und nimmt folglich Werte von 0 bis 1 an.

Der a_{w}-Wert wird im Allgemeinen über die Messung der relativen Luftfeuchtigkeit über einer Probe mittels resistiv elektrolytischer Messzelle, einem Taupunktspiegel oder mittels kapazitiver Messung bestimmt.

Besonders gute Ergebnisse werden im Rahmen der vorliegenden Erfindung erhalten, wenn die Zusammensetzung einen a_{w}-Wert von weniger als 0,85, insbesondere weniger als 0,75, vorzugsweise weniger 0,65, bevorzugt weniger als 0,60 aufweist.

Gleichermaßen kann es im Rahmen der vorliegenden Erfindung vorgesehen sein, dass die Zusammensetzung einen a_{w}-Wert im Bereich von 0,01 bis 0,95, insbesondere 0,01 bis 0,85, vorzugsweise 0,01 bis 0,75, bevorzugt 0,02 bis 0,65, besonders bevorzugt 0,02 bis 0,60, aufweist.

Wenn die erfindungsgemäße wässrige Zusammensetzung keine weiteren Stoffe aufweist, welche das Wachstum von Mikroorganismen, insbesondere von Bakterien, Hefen und Schimmelpilzen, hindert bzw. hemmt oder verlangsamt, weist die wässrige Zusammensetzung vorzugsweise einen a_{w}-Wert von weniger als 0,75, auf, vorzugsweise weniger als 0,65, bevorzugt weniger als 0,6, auf. Gleichermaßen ist es gemäß dieser bevorzugten Ausführungsform der vorliegenden Erfindung vorzugsweise vorgesehen, dass die Zusammensetzung einen a_{w}-Wert im Bereich von 0,01 bis 0,75, vorzugsweise 0,02 bis 0,65, bevorzugt 0,02 bis 0,60, aufweist.

Für den Fall, dass die erfindungsgemäße wässrige Zusammensetzung einen weiteren Stoff aufweist, welcher das Wachstum von Mikroorganismen hemmt bzw. stört bzw. unterdrückt, kann der gesamte oben genannte Bereich bis zu einem a_{w}-Wert von 0,95 ausgeschöpft werden. Besonders bevorzugt wird es in diesem Zusammenhang jedoch, wenn die wässrige Zusammensetzung einen a_{w}-Wert von weniger als 0,95, insbesondere weniger als 0,85, vorzugsweise weniger als 0,75 aufweist. Im besonderen Maße hat es sich gemäß dieser Ausführungsform bewährt, wenn die wässrige Zusammensetzung einen a_{w}-Wert im Bereich von 0,60 bis 0,95, insbesondere 0,65 bis 0,85, insbesondere 0,75 bis 0,85, aufweist.

Üblicherweise weist die Zusammensetzung mindestens eine Verbindung mit hohem Wasserbindungsvermögen auf. Eine Verbindung mit hohem Wasserbindungsvermögen in der erfindungsgemäßen Zusammensetzung ermöglicht insbesondere eine gezielte Einstellung des Gehalts an freiem Wasser, d.h. der Wasseraktivität bzw. des a_{w}-Werts. Die Verbindung mit hohem Wasserbindungsvermögen wird dabei vorteilhafter Weise derart ausgewählt, dass die weiteren Eigenschaften der Pigmentpräparationen, insbesondere Vlies- und Rheologieverhalten, Antrocknungsverhalten und Colorisitk nicht negativ beeinflusst werden.

Unter dem Wasserbindungsvermögen ist dabei die Eigenschaft eines Stoffes zu verstehen, Wasser chemisch oder physikalisch zu binden, beispielsweise in Form von Hydraten oder (Hydro-)Gelen. Das gebundene Wasser steht insbesondere nicht mehr für Stoffwechselvorgänge von Mikroorganismen zur Verfügung.

Im Rahmen der vorliegenden Erfindung hat es sich bewährt, wenn die Verbindung mit hohem Wasserbindungsvermögen ausgewählt ist aus der Gruppe bestehend aus Sacchariden, Polyglykolen, Zeolithen, Zuckeralkoholen (Alditolen), anorganischen Schichtsilikaten, Acrylsäurecopolymeren, Polyacrylaten (z.B. Carbopol-Typen der Firma Lubrizol, z. B. Carbopol ETD 2020 oder Aqua SF-1), HEUR (*Hydrophobically Modified Ethoxylated Urethane Polymers*)*,* Polyurethanverdickern (z. B. spezielle Aculyn-Typen der Firma Rohm & Haas), kolloidaler Kieselsäure, harnstoff- und/oder polyamidbasierten Rheologiemodifizierern und deren Mischungen.

Besonders gute Ergebnisse werden im Rahmen der vorliegenden Erfindung erhalten, wenn die Verbindung mit hohem Wasserbindungsvermögen ausgewählt ist aus der Gruppe von Sacchariden, Polyglykolen, Zeolithen, Zuckeralkoholen (Alditolen), Acrylsäurecopolymeren und deren Mischungen.

Gemäß einer bevorzugten Ausführungsform der vorliegenden Erfindung wird es bevorzugt, wenn die Verbindung mit hohem Wasserbindungsvermögen ausgewählt ist aus der Gruppe von Sacchariden, Polyglykolen, Zeolithen, Zuckeralkoholen und deren Mischungen.

Es hat sich bewährt, wenn das Acrylsäurecopolymer und/oder das Polyacrylat ausgewählt ist der Gruppe der superabsorbierenden Poylmere (Superabsorbent Polymers, SAPs), auch Superabsorber, genannt.

Insbesondere kann das Saccharid ein Mono-, Di- oder Polysaccharid, vorzugsweise ein Mono- oder ein Disaccharid, sein. Bevorzugt ist das Saccharid ein Monosaccharid. Dabei kann das Monosaccharid ausgewählt sein aus der Gruppe von Dextrose, Mannose, Fructose und/oder Galaktose und/oder kann das Disaccharid ausgewählt sein aus der Gruppe von Saccharose, Lactose, Maltose und/oder Cellobiose.

Im Rahmen der vorliegenden Erfindung hat es sich besonders bewährt, wenn das Polysaccharid ausgewählt ist aus der Gruppe von Gummi arabicum, Karaya, Tragant, Johannisbrotkernmehl, Guar, Quittenschleim, Pektin, Agar-Agar, Carrageen, Stärke, Stärkederivaten, Cellulose, Cellulosederivaten, insbesondere Methylcellulose, Carboxymethylcellulose, Ethylcellulose, Hydroxyethylcellulose, Hydroxypropylcellulose, Hydroxypropylmethylcellulose, Methylhydroxyethylcellulose, Celluloseacetat, Lignin, Lingninderivaten, insbesondere Kraft-Lignin, und deren Mischungen.

Besonders gute Ergebnisse werden in diesem Zusammenhang erhalten, wenn das Polysaccharid ausgewählt ist aus der Gruppe von Gummi arabicum, Cellulose, Cellulosederivaten und deren Mischungen.

Wenn die Verbindung mit hohem Wasserbindungsvermögen ein Polyglykol ist, so hat es sich bewährt, wenn das Polyglykol ausgewählt ist aus der Gruppe von Polyethylenglykol, Polypropylenglykol und deren Mischungen.

Der Begriff der Zuckeralkohole, auch Polyole oder Alditole genannt, wie er erfindungsgemäß verwendet wird, ist insbesondere eine Gruppenbezeichnung für im Allgemeinen kristalline, gut wasserlösliche Polyhydroxyverbindungen, die durch Reduktion der Carbonylfunktion aus Zuckern entstehen. Hierbei werden insbesondere Monosaccharid-Zuckeralkohole und Disaccharid-Zuckeralkohole unterschieden. Für weitergehende Einzelheiten zu dem Begriff der Zuckeralkohole kann insbesondere verwiesen werden auf Römpp Lexikon Chemie, 10. Auflage, Georg-Thieme-Verlag, Stuttgart/New York, Band 6, 1999, Seite 1953/1954, Stichwort: "Zuckeralkohole" sowie auf die dort jeweils referierte Literatur, deren jeweiliger Inhalt durch Bezugnahme eingeschlossen ist.

Darüber hinaus werden besonders gute Ergebnisse erhalten, wenn der Zuckeralkohol ausgewählt ist aus der Gruppe von Mannit, Isomalt, Lactit, Sorbit, Xylit, Threit, Erythrit, Arabit und deren Mischungen.

Für den Fall, dass die Verbindung mit hohem Wasserbindungsvermögen ein anorganisches Schichtsilikat ist, so hat es sich bewährt, wenn das anorganische Schichtsilikat ausgewählt ist aus Bentoniten, Hectoriten, Magnesium-AluminiumSilikaten und deren Mischungen.

Besonders gute Ergebnisse werden im Rahmen der vorliegenden Erfindung erhalten, wenn die Verbindung mit hohem Wasserbindungsvermögen ausgewählt ist aus der Gruppe von Dextrose, Mannose, Fructose, Galaktose, Cellulose, Cellulosederivaten, Pektin, Lignin, Lingninderivaten, Polyethylenglykol, Polypropylengykol, Zeolithen, Mannit, Isomalt, Lactit, Sorbit, Xylit, Threit, Erythrit, Arabit, Acrylsäurecopolymeren und deren Mischungen.

In diesem Zusammenhang ist es vorzugsweise vorgesehen, dass die Verbindung mit hohem Wasserbindungsvermögen ausgewählt ist aus der Gruppe von Dextrose, Mannose, Fructose, Galaktose, Cellulose, Methylcellulose, Carboxymethylcellulose, Ethylcellulose, Hydroxyethylcellulose, Hydroxypropylcellulose, Hydroxypropylmethylcellulose, Methylhydroxyethylcellulose, Celluloseacetat, Pektin, Lignin, Kraft-Lignin, Polyethylenglykol, Polypropylengykol, Zeolithen, Mannit, Isomalt, Lactit, Sorbit, Xylit, Threit, Erythrit, Arabit, Acrylsäurecopolymeren und deren Mischungen.

Was nun die Menge anbelangt, in welcher die Zusammensetzung die Verbindung mit hohem Wasserbindungsvermögen enthält, so kann diese in weiten Bereichen variieren. Es hat sich jedoch bewährt, wenn die Zusammensetzung die Verbindung mit hohem Wasserbindungsvermögen in Mengen von bis zu 30 Gew.-%, insbesondere bis zu 20 Gew.-%, vorzugsweise bis zu 15 Gew.-%, bevorzugt bis zu 12 Gew.-%, bezogen auf die Zusammensetzung, aufweist.

Gleichermaßen hat es sich bewährt, wenn die Zusammensetzung die Verbindung mit hohem Wasserbindungsvermögen in Mengen von mindestens 0,1 Gew.-%, insbesondere 0,2 Gew.-%, vorzugsweise 0,5 Gew.-%, bevorzugt 1 Gew.-%, bezogen auf die Zusammensetzung, aufweist.

Im Rahmen der vorliegenden Erfindung werden insbesondere gute Ergebnisse erhalten, wenn die Zusammensetzung die Verbindung mit hohem Wasserbindungsvermögen in Mengen von 0,1 bis 30 Gew.-%, insbesondere 0,2 bis 20 Gew.-%, vorzugsweise 0,5 bis 15 Gew.-%, bevorzugt 1 bis 12 Gew.-%, bezogen auf die Zusammensetzung, aufweist.

Wie zuvor bereits ausgeführt, weist die Zusammensetzung üblicherweise einen basischen pH-Wert auf. In diesem Zusammenhang hat es sich besonders bewährt, wenn die Zusammensetzung einen pH-Wert von 9,5 oder höher aufweist. Besonders gute Ergebnisse werden in diesem Zusammenhang erhalten, wenn die Zusammensetzung einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

Gemäß einer bevorzugten Ausführungsform der vorliegenden Erfindung weist die Zusammensetzung somit einen a_{w}-Wert von weniger als 0,65, insbesondere weniger als 0,60, auf, wobei die Zusammensetzung (a) wenigstens eine Verbindung mit einem hohen Wasserbindungsvermögen aufweist.

Im Rahmen der vorliegenden Erfindung ist es üblicherweise vorgesehen, dass die Zusammensetzung ein Netz- oder Dispergiermittel aufweist. Die Anwesenheit von Netz- oder Dispergiermitteln ist insbesondere vorteilhaft, um eine Sedimentation von Pigmenten, Füllstoffen oder anderen unlöslichen Bestandteilen der Zusammensetzung zu verhindern. Die Verwendung von Netz- oder Dispergiermitteln in Pigmentpräparationen ist vorteilhaft, da sie dazu beitragen, die Benetzung und Verteilung von Partikeln in einer Flüssigkeit zu verbessern. Ohne von Netz- oder Dispergiermittel neigen die Partikel aufgrund ihrer Oberflächenspannung in der Regel dazu, zu agglomerieren und sich in der Flüssigkeit abzusetzen, was zu einer ungleichmäßigen Verteilung und einer schlechten Produktqualität führt. Netzmittel reduzieren die Oberflächenspannung der Flüssigkeit, während Dispergiermittel die Partikel stabilisieren und ihre Abstoßung voneinander erhöhen. Durch die Verwendung von Netz- oder Dispergiermitteln können die Partikel vorteilhafterweise gleichmäßig in der Flüssigkeit verteilt bleiben, was eine stabile und homogene Formulierung fördert.

Wenn die Zusammensetzung ein Dispergiermittel enthält, so ist das Netz- oder Dispergiermittel üblicherweise ausgewählt aus der Gruppe von nichtionischen Polymeren, kationischen Polymeren, anionischen Polymeren und deren Mischungen, insbesondere nichtionischen Copolymeren, anionischen Copolymeren, Copolymeren mit pigmentaffinen Gruppen, Polyethern und deren Mischungen. Als Netz- und Dispergiermittel kann somit eine große Anzahl oberflächenaktiver Substanzen, eingesetzt werden. Besonders bevorzugt werden Netz- und Dispergiermittel mit pigmentaffinen Gruppen verwendet.

Besonders gute Ergebnisse werden im Rahmen der vorliegenden Erfindung erhalten, wenn das Netz- oder Dispergiermittel ausgewählt ist aus der Gruppe von Polycarboxylaten, insbesondere Salzen von Polyacrylsäuren, Polyphosphaten, insbesondere linearen Polyphosphate und/oder cyclischen Methaphosphaten, Polyetherphosphaten, Polycarbonsäurepolymeren, Acrylblock-Copolymeren, ethoxylierten Fettalkoholen, nichtionischen gesättigten langkettigen Alkoholen, Fettalkoholsulfaten, Alkylphosphonaten, Polysiloxanethern, insbesondere Methoxypolyethoxypropyltrisiloxanen, Alkindiolethoxylaten, Fluortensiden und deren Mischungen.

Das Molgewicht des eingesetzten Netz- oder Dispergiermittels kann gleichermaßen in weiten Bereichen variieren. Üblicherweise weist das eingesetzte Netz- oder Dispergiermittel ein mittleres, insbesondere gewichtsmittleres Molekulargewicht von mindestens 1.000 g/mol, vorzugsweise mindestens 1.500 g/mol, auf. Im Allgemeinen weist das Netz- oder Dispergiermittel ein mittleres, insbesondere gewichtsmittleres Molekulargewicht im Bereich von 1.000 bis 1.000.000 g/mol, insbesondere 1.250 bis 100.000 g/mol, vorzugsweise 1.500 bis 75.000 g/mol, besonders bevorzugt 2.000 bis 50.000 g/mol, auf.

Vorteilhafterweise ist das Netz- oder Dispergiermittel auf Basis eines funktionalisierten, insbesondere sauer und/oder basisch funktionalisierten, Polymers, insbesondere mit polaren funktionellen Gruppen, ausgebildet. Beispielsweise kann das Netz- oder Dispergiermittel aus der Gruppe von funktionalisierten Polyaminen, funktionalisierten Polyurethanen, funktionalisierten Poly(meth)acrylaten, funktionalisierten Vinylcopolymeren, funktionalisierten Polyether/Polyester-Copolymeren, funktionalisierten Polyethern, funktionalisierten Polyestern, funktionalisierten Fettsäurecopolymeren, funktionalisierten Blockcopolymeren und/oder funktionalisierten Polyalkoxylaten sowie Mischungen oder Kombinationen von mindestens zwei dieser Verbindungen ausgewählt sein.

Üblicherweise kann das Netz- oder Dispergiermittel auf Basis eines funktionalisierten insbesondere sauer und/oder basisch funktionalisierten, Polymers ausgebildet sein, wobei das Polymer mindestens eine funktionelle Gruppe enthält, welche insbesondere ausgewählt sein kann aus der Gruppe von Hydroxyl-(-OH), Thiol- (-SH), Amin-, Ammonium-, Carboxyl-, Carbonyl-, Ester-, Ether-, Sulfonyl-, Phosphonsäure, Phosphorsäure- und/oder Phosphorsäureester-Funktionen, vorzugsweise Hydroxyl- (-OH), Thiol- (-SH) und/oder Amin-Funktionen.

Im Falle einer basischen Funktionalisierung kann die betreffende Basenzahl des Polymers insbesondere mindestens 10 mg KOH/g, insbesondere mindestens 20 mg KOH/g, vorzugsweise mindestens 25 mg KOH/g, betragen, und im Fall einer sauren Funktionalisierung kann die Säurezahl insbesondere mindestens 10 mg KOH/g, vorzugsweise mindestens 25 mg KOH/g, besonders bevorzugt mindestens 50 mg KOH/g, betragen. Im Falle von Polymeren mit saurer und basischer Funktionalisierung gelten beide vorgenannte Werte.

In bevorzugter Weise kann das Netz- oder Dispergiermittel aus den nachfolgend genannten Dispergier- und/oder Netzmitteln ausgewählt sein, wie sie in den nachfolgend aufgeführten Druckschriften beschrieben sind, deren jeweiliger Offenbarungsgehalt hiermit durch Bezugnahme eingeschlossen ist:
- Polyurethane gemäß EP 0 154 678 A und EP 0 318 999 A;
- Polyurethane gemäß EP 0 270 126 A;
- modifizierte Polyurethane und Polyamine gemäß EP 1 593 700 A;
- versalzte Polyamine gemäß EP 0 893 155 A;
- Phosphorsäureester gemäß EP 0 417 490 A;
- verzweigte, Imidazolgruppen enthaltende Polymere gemäß EP 1 081 169 A;
- Ethoxylate, insbesondere alkoxylierte Epoxid/Amin-Adukte, gemäß EP 1 650 246 A und Epoxid-Adukte gemäß EP 1 486 524 A;
- Copolymerisate mit Fettsäure gemäß EP 1 640 389 A;
- umgeesterte Polyacrylate gemäß EP 0 879 860 A;
- säurefunktionelle Polyester gemäß WO 2005/097872 A;
- Blockcopolymere (Gradientencopolymere) gemäß EP 1 416 019 A.

Besonders gute Ergebnisse werden im Rahmen der vorliegenden Erfindung erhalten, wenn die Zusammensetzung das Netz- oder Dispergiermittel in Mengen 1 bis 50 Gew.-%, insbesondere 3 bis 45 Gew.-%, vorzugsweise 5 bis 40 Gew.-%, bevorzugt 8 bis 35 Gew.-%, bezogen auf die Zusammensetzung, enthält.

Gemäß einer bevorzugten Ausführungsform der vorliegenden Erfindung weist die Zusammensetzung einen a_{w}-Wert von weniger als 0,95 auf und enthält
(a) mindestens eine Verbindung mit einem hohen Wasserbindungsvermögen, insbesondere in Mengen von 0,1 bis 30 Gew.-%, bezogen auf die Zusammensetzung, und
(b) ein Netz- oder Dispergiermittel, insbesondere in Mengen von 1 bis 50 Gew.-%, bezogen auf die Zusammensetzung.

Für diese besondere und bevorzugte Ausführungsform gelten alle vorgenannten Vorteile und Besonderheiten, Ausführungsformen und Merkmale entsprechend.

Im Rahmen der vorliegenden Erfindung ist es üblicherweise vorgesehen, dass die Zusammensetzung ein Pigment aufweist.

Üblicherweise ist das Pigment ausgewählt aus der Gruppe von organischen Pigmenten, anorganischen Pigmenten und deren Mischungen.

Im Allgemeinen ist das im Rahmen der vorliegenden Erfindung eingesetzte Pigment ausgewählt aus der Gruppe von organischen und/oder anorganischen Pigmenten, insbesondere Pigmentrußen, Metalloxiden, insbesondere Oxiden von Titan, Zink, Eisen und/oder Cer, sowie deren Mischungen.

Geeignete organische Pigmente umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen. Des Weiteren können die organischen Pigmente beispielsweise ausgewählt sein aus: Carmine, Carbon Black, Anilinschwarz, Azogelb, Chinacridon, Phthalocyaninblau. Beispiele hierfür sind: PY 74, PY 65, PY 110, PR 112, PR 122, PR 254, PR 168, PO 5, PG 7, PB 15:1, PB 15:2, PB 15:3, PB 15:4 und PBk 7.

Geeignete anorganische Pigmente umfassen beispielsweise Metalloxide bzw. andere in Wasser schwerlösliche oder zumindest im Wesentlichen unlösliche Metallverbindungen, insbesondere Oxide von Titan, beispielsweise Titandioxid (CI 77891), Zink, Eisen, beispielsweise rotes und schwarzes Eisenoxid (CI 77491 (rot), 77499 (schwarz)) oder Eisenoxidhydrat (CI 77492, gelb), Zirkonium, Silizium, Mangan, Aluminium, Cer, Chrom sowie Mischoxide der genannten Elemente und deren Mischungen. Weitere geeignete Pigmente sind Bariumsulfat-, Zinksulfid-, Manganviolett-, Ultramarinblau- und Berliner Blau-Pigmente. Die Pigmente können oberflächenmodifiziert sein, wobei die Oberflächen durch die Modifizierung beispielsweise hydrophile, amphiphile oder hydrophobe Verbindungen bzw. Gruppen aufweisen können. Insbesondere können die anorganischen Pigmente PR 101, PY 42, Pb 28, Pb 29, PW 6 und Pbk 33 eingesetzt werden. Die Oberflächenbehandlung kann darin bestehen, dass die Pigmente nach für den Fachmann bekannten Verfahren mit einer dünnen hydrophilen und/oder hydrophoben anorganischen bzw. organischen Schicht versehen werden.

Im Rahmen der vorliegenen Erfindung hat es sich jedoch bewährt, wenn das Pigment ausgewählt ist aus der Gruppe von Titandioxid, Eisenoxidgelb, Eisenoxidrot, Bismutvanadat, Rußschwarz, Toluidinrot, Phthalocyanin, Phthalocyaninblau, Monoazogelb, Isoindolinongelb, Chinacridon, Benzimidazolon, Diketopyrrolopyrrolrot und deren Mischungen.

Üblicherweise enthält die Zusammensetzung das Pigment in Mengen von 5 bis 85 Gew.-%, insbesondere 6 bis 80 Gew.-%, vorzugsweise 8 bis 75 Gew.-%, bevorzugt 10 bis 70 Gew.-%, bezogen auf die Zusammensetzung.

Im Rahmen der vorliegenden Erfindung werden somit besonders gute Ergebnisse erhalten, wenn die Zusammensetzung einen a_{w}-Wert von weniger als 0,95 aufweist und
(a) mindestens eine Verbindung mit einem hohen Wasserbindungsvermögen, insbesondere in Mengen von 0,1 bis 30 Gew.-%,
(b) ein Netz- oder Dispergiermittel, insbesondere in Mengen von 1 bis 50 Gew.-%, und
(c) ein Pigment, insbesondere in Mengen von 5 bis 85 Gew.-%,
jeweils bezogen auf die Zusammensetzung, enthält.

Vorzugsweise weist die vorgenannte Zusammensetzung einen basischen pH-Wert auf.

Für diese Ausführungsform der vorliegenden Erfindung gelten alle zuvor genannten Vorteile, bevorzugten Merkmale und Besonderheiten, die zuvor im Zusammenhang mit anderen Ausführungsformen genannt wurden, entsprechend.

Im Rahmen der vorliegenden Erfindung ist es insbesondere üblicherweise vorgesehen, dass die Zusammensetzung ein pH-Stellmittel aufweist. Bei einem pH-Stellmittel wird der pH-Wert insbesondere auf besonders bevorzugte Bereiche sowohl für die Stabilität der Zusammensetzung als auch zur Verhinderung eines Befalls mit Keimen eingestellt.

Das pH-Stellmittel ist dabei üblicherweise ausgewählt aus anorganischen und organischen Säuren und Basen, insbesondere anorganischen und organischen Basen, vorzugsweise anorganischen Basen.

Wenn die Zusammensetzung ein pH-Stellmittel enthält, so hat es sich bewährt, wenn das pH-Stellmittel ausgewählt ist aus der Gruppe von Salzsäure, Schwefelsäure, Salpetersäure, Zitronensäure, Pyridincarbonsäure, Essigsäure, Natriumhydroxid, Kaliumhydroxid, Lithiumhydroxid, Calciumhydroxid, Ammoniak, Wasserglas, Dimethylglucamin und deren Mischungen. Vorzugsweise ist das pH-Stellmittel ausgewählt aus der Gruppe von Natriumhydroxid, Kaliumhydroxid, Lithiumhydroxid, Calciumhydroxid, Ammoniak, Wasserglas, Dimethylglucamin und deren Mischungen.

Wenn die Zusammensetzung ein pH-Stellmittel enthält, so enthält die Zusammensetzung das pH-Stellmittel üblicherweise in Mengen von 0,01 bis 10 Gew.-%, insbesondere 0,1 bis 8 Gew.-%, vorzugsweise 0,5 bis 7 Gew.-%, bevorzugt 1 bis 5 Gew.-%, bezogen auf die Zusammensetzung.

Im Rahmen der vorliegenden Erfindung werden somit besonders gute Ergebnisse erhalten, wenn die Zusammensetzung einen a_{w}-Wert von weniger als 0,95 aufweist, und
(a) mindestens eine Verbindung mit einem hohen Wasserbindungsvermögen, insbesondere in Mengen von 0,1 bis 30 Gew.-%,
(b) ein Netz- oder Dispergiermittel, insbesondere in Mengen von 1 bis 50 Gew.-%,
(c) ein Pigment, insbesondere in Mengen von 5 bis 85 Gew.-%, und
(d) ein pH-Stellmittel, insbesondere in Mengen von 0,1 bis 10 Gew.-%,
jeweils bezogen auf die Zusammensetzung, enthält.

Für diese Ausführungsformen gelten alle Merkmale, Vorteile und Besonderheiten, die zuvor im Zusammenhang mit anderen Ausführungsformen beschrieben wurden, entsprechend.

Vorteilhafterweise weist die Zusammensetzung üblicherweise mindestens ein Additiv auf. Üblicherweise ist das Additiv ausgewählt aus der Gruppe von Stabilisatoren, entschäumenden Komponenten, pH-Stabilisatoren, und deren Mischungen.

Als entschäumende Komponenten eignen sich in der Regel geringe Mengen an hydrophoben Bestandteilen, wie z. B. Vaselinöl (INCI: Petrolatum), Rizinusöl, Mineralöle, Pflanzenöle oder die unter den INCI-Namen bekannten Silikonverbindungen, wie z. B. Bisphenylhexamethicone, Dimethicone, Dimethicone Silylate, Dimethiconol, Diphenyl Dimethicone, Diphenylsiloxy Phenyl Trimethicone, Disiloxane, PEG/PPG-12/16 Dimethicone, PEG/PPG-12/18 Dimethicone, PEG/PPG-16/8 Dimethicone, PEG/PPG-8/26 Dimethicone, Phenetyl Disiloxane, Phenyl Dimethicone, Phenyl Trimethicone, Polysilicone-1, Polysilicone-2, Polysilicone-7, Polysilicone-8, Polysilicone-10, Silica Dimethicone Silylate, Silica Silylate, Simethicone, Trimethylsiloxysilicate, Trimethylsiloxysilicate/Dimethicone Crosspolymer, Triphenyl Trimethicone und Trisiloxane, Behenyl Methacrylate/Ethylamine Oxide, Methacrylate Copolymer, C12-14 Sec-Pareth-5, Hexamidine Diisothionate, Hexyldeceth-2, Laureth-5 Butyl Ether, Rhus Semialata Leaf Extract, sowie die Kombination von hydrophoben Bestandteilen mit Feststoffen, beispielsweise Silica, wie Sipernat^{®}-Typen der Firma Evonik Industries. Alkohole, wie z. B. Ethanol, Isopropanol, Hexan-1-ol, Propan-2-ol, können insbesondere in größeren Einsatzmengen ebenfalls entschäumend wirken.

Wenn die Zusammensetzung ein Additiv aufweist, so hat es sich bewährt, wenn die Zusammensetzung das Additiv in Mengen von 0,01 bis 10 Gew.-%, insbesondere 0,1 bis 8 Gew.-%, vorzugsweise 0,5 bis 6 Gew.-%, bevorzugt 1 bis 5 Gew.-%, bezogen auf die Zusammensetzung, enthält.

Im Rahmen der vorliegenden Erfindung werden somit besonders gute Ergebnisse erhalten, wenn die Zusammensetzung

Im Rahmen der vorliegenden Erfindung werden somit besonders gute Ergebnisse erhalten, wenn die Zusammensetzung einen a_{w}-Wert von weniger als 0,95 aufweist, und
(a) mindestens eine Verbindung mit einem hohen Wasserbindungsvermögen, insbesondere in Mengen von 0,1 bis 30 Gew.-%,
(b) ein Netz- oder Dispergiermittel, insbesondere in Mengen von 1 bis 50 Gew.-%,
(c) ein Pigment, insbesondere in Mengen von 5 bis 85 Gew.-%,
(d) ein pH-Stellmittel, insbesondere in Mengen von 0,1 bis 10 Gew.-%, und
(e) ein Additiv, insbesondere in Mengen von 0,01 bis 10 Gew.-%,
jeweils bezogen auf die Zusammensetzung, enthält.

Für diese Ausführungsformen gelten alle Merkmale, Vorteile und Besonderheiten, die zuvor im Zusammenhang mit anderen Ausführungsformen beschrieben wurden, entsprechend.

Wie zuvor bereits ausgeführt, ist die Zusammensetzung eine wässrige Zusammensetzung. Im Rahmen der vorliegenden Erfindung enthält die Zusammensetzung Wasser üblicherweise in Mengen von 1 bis 80 Gew.-%, insbesondere 2 bis 60 Gew.-%, vorzugsweise 3 bis 50 Gew.-%, bevorzugt 5 bis 40 Gew.-%, bezogen auf die Zusammensetzung.

Im Rahmen der vorliegenden Erfindung werden somit besonders gute Ergebnisse erhalten, wenn die Zusammensetzung einen a_{w}-Wert von weniger als 0,95 aufweist, und
(a) mindestens eine Verbindung mit einem hohen Wasserbindungsvermögen, insbesondere in Mengen von 0,1 bis 30 Gew.-%,
(b) ein Netz- oder Dispergiermittel, insbesondere in Mengen von 1 bis 50 Gew.-%,
(c) ein Pigment, insbesondere in Mengen von 5 bis 85 Gew.-%,
(d) ein pH-Stellmittel, insbesondere in Mengen von 0,1 bis 10 Gew.-%,
(e) ein Additiv, insbesondere in Mengen von 0,01 bis 10 Gew.-%, und
(f) Wasser, insbesondere in Mengen von 1 bis 80 Gew.-%,
jeweils bezogen auf die Zusammensetzung, enthält.

Für diese Ausführungsform der vorliegenden Erfindung gelten alle zuvor genannten Vorteile, bevorzugten Merkmale und Besonderheiten, die zuvor im Zusammenhang mit anderen Ausführungsformen genannt wurden, entsprechend.

Darüber hinaus ist es möglich, dass die Zusammensetzung Füllstoffe enthält. Wenn die Zusammensetzung Füllstoffe enthält, so sind die Füllstoffe üblicherweise anorganische Füllstoffe. Es hat sich dabei bewährt, wenn die Füllstoffe ausgewählt sind aus der Gruppe von Bariumsulfat, Calciumcarbonat, Siliciumdioxid, insbesondere amorphem Siliciumdioxid, Silikaten, Talk, Glimmer, Kaolin, Mikrohohlkugeln und deren Mischungen.

Weiterhin werden gute Ergebnisse erhalten, wenn die Zusammensetzung die Füllstoffe in Mengen von 1 bis 30 Gew-%, insbesondere 2 bis 25 Gew.-%, vorzugsweise 3 bis 20 Gew.-%, bevorzugt 4 bis 15 Gew.-%, besonders bevorzugt 5 bis 10 Gew.-%, bezogen auf die Zusammensetzung, enthält.

Darüber hinaus gilt, dass alle Ausführungsformen der wässrigen Zusammensetzung vorzugsweise einen basischen pH-Wert aufweisen. Insbesondere nimmt der pH-Wert die zuvor genannten basischen pH-Werte an.

Im Rahmen der vorliegenden Erfindung ist es üblicherweise vorgesehen, dass die Zusammensetzung zumindest im Wesentlichen frei ist von Konservierungsstoffen, insbesondere frei ist von Konservierungsmitteln.

Gleichermaßen ist im Rahmen der vorliegenden Erfindung vorzugsweise vorgesehen, dass die Zusammensetzung zumindest im Wesentlichen frei ist von Bioziden, insbesondere frei ist von Bioziden.

Die erfindungsgemäßen Zusammensetzungen enthalten vorzugsweise keine Konservierungsmittel, keine Biozide und sind auch frei von flüchtigen organischen Verbindungen, d.h. VOC-frei, so dass sie üblicherweise keine deklarationspflichtigen Stoffe enthalten und unter Gesichtspunkten des Umweltschutzes, des Gesundheitsschutzes, sowie des Arbeitsschutzes problemlos und vielfältig angewendet werden können.

Die erfindungsgemäße Zusammensetzung, insbesondere Pigmentpaste, kann als biozid- und konservierungsmittelfreies System, welches darüber hinaus keine Lösemittel aufweist, d.h. VOC-frei ist, in sämtlichen derzeit gebräuchlichen Standardabtönsystemen, aber auch in lösemittelhaltigen Bindemittelsystemen oder 100 %-Feststoffsystemen eingesetzt werden. Insbesondere können die erfindungsgemäßen Zusammensetzungen, insbesondere Pigmentpasten, ohne Umstellung auf den handelsüblichen und weit verbreiteten Maschinen zum Abtönen von Anstrichmitteln eingesetzt werden.

Darüber hinaus sind die erfindungsgemäßen Zusammensetzungen lagerstabil, insbesondere über einen Zeitraum von mindestens 2 Monaten, insbesondere mindestens 4 Monaten, insbesondere mindestens 6 Monaten, vorzugsweise mindestens 12 Monaten. Gleichermaßen kann es vorgesehen sein, dass die erfindungsgemäßen Zusammensetzungen über einen Zeitraum von 2 bis 36 Monate, insbesondere 4 bis 20 Monate, insbesondere 6 bis 18 Monate, vorzugsweise 12 bis 15 Monate, lagerstabil ist.

Unter "lagerstabil" ist dabei zu verstehen, dass sich die physikalischen und chemischen Eigenschaften der Zusammensetzung während der Lagerung nicht oder nur in einem Maße ändern, welches die Anwendungseigenschaften der Zusammensetzung nicht beeinträchtigt. Die Lagerstabilität von Pigmentpasten bezieht sich insbesondere auf die Fähigkeit einer Pigmentpaste, ihre Eigenschaften und Leistungsfähigkeit während der Lagerung unter bestimmten Bedingungen, insbesondere in Bezug auf Verkeimung, beizubehalten. Eine Pigmentpaste wird üblicherweise als stabil bezeichnet, wenn sie während der Lagerung ihre Homogenität, Farbe, Viskosität, Dispergierbarkeit, chemische Stabilität und mikrobiologische Unbedenklichkeit beibehält. Eine Verkeimung der Pigmentpaste kann zur Bildung von unerwünschten Mikroorganismen führen, die das Produkt verderben und unbrauchbar machen kann.

Wie zuvor bereits ausgeführt, weist die wässrige Zusammensetzung insbesondere einen a_{w}-Wert von weniger als 0,75, vorzugsweise weniger als 0,65, bevorzugt weniger als 0,6, auf, die erfindungsgemäße wässrige Zusammensetzung keine weiteren Stoffe aufweist, welche das Wachstum von Mikroorganismen, insbesondere von Bakterien, Hefen und Schimmelpilzen, hindern bzw. hemmen oder verlangsamen. Gleichermaßen ist es gemäß dieser bevorzugten Ausführungsform der vorliegenden Erfindung vorzugsweise vorgesehen, dass die Zusammensetzung einen a_{w}-Wert im Bereich von 0,01 bis 0,75, vorzugsweise 0,02 bis 0,65, bevorzugt 0,02 bis 0,60, aufweist.

Gemäß einer bevorzugten Ausführungsform der vorliegenden Erfindung weist die Zusammensetzung mindestens eine organische oder anorganische, vorzugsweise anorganische, Verbindung eines zwei- oder dreiwertigen Metalls auf. Es hat sich gezeigt, dass insbesondere bei Verwendung von Metallverbindungen, welche zwei- und dreiwertige Ionen bilden können, die Zusammensetzungen deutlich höhere a_{w}-Werten von bis zu 0,95 aufweisen können und trotzdem hervorragend vor einem Befall mit Mikroorganismen und Keimen geschützt sind.

Es hat sich hierbei bewährt, wenn das zwei- oder dreiwertige Metall ausgewählt ist aus der Gruppe von Kupfer, Aluminium, Calcium, Silber, Zink, Magnesium, Barium, Eisen und deren Mischungen. Vorzugsweise ist das zwei- oder dreiwertige Metall ausgewählt aus der Gruppe von Kupfer, Aluminium, Kupfer, Aluminium, Calcium, Magnesium und deren Mischungen. Im Rahmen der vorliegenden Erfindung hat es sich besonders bewährt, wenn das zwei- oder dreiwertige Metall ausgewählt ist aus der Gruppe von Aluminium, Calcium, Magnesium und deren Mischungen, vorzugsweise Aluminium, Calcium und deren Mischungen.

Wie zuvor bereits ausgeführt, liegen die zwei- oder dreiwertigen Metalle in Form ihrer organischen oder anorganischen Verbindungen vor. Es hat sich in diesem Zusammenhang bewährt, wenn die mindestens eine organische oder anorganische, vorzugsweise anorganische, Verbindung eines zwei- oder dreiwertigen Metalls ausgewählt ist aus der Gruppe von Sulfaten, Phosphaten, Nitraten, Acetaten, Propionaten, Phosphonaten, Aluminaten und deren Mischungen. Gemäß einer bevorzugten Ausführungsform ist die mindestens eine organische oder anorganische, vorzugsweise anorganische, Verbindung eines zwei- oder dreiwertigen Metalls ausgewählt aus der Gruppe von Sulfaten, Phosphaten, Aluminaten und deren Mischungen.

Gute Ergebnisse werden im Rahmen der vorliegenden Erfindung erhalten, wenn die organische oder anorganische, vorzugsweise anorganische, Verbindung eines zwei- oder dreiwertigen Metalls ausgewählt ist aus der Gruppe von Magnesiumaluminiumphosphaten, Magnesiumaluminiumsilikaten, Calciumaluminiumphosphaten, Calciumaluminiumsilikaten, Calciumaluminat-Hydraten, Calciumaluminiumsulfat und deren Mischungen.

Im Rahmen der vorliegenden Erfindung werden beste Ergebnisse erhalten, wenn die anorganische Verbindung eines zwei- oder dreiwertigen Metalls ausgewählt ist aus Calciumaluminaten.

Es hat sich bewährt, wenn die anorganische Verbindung eines zwei- oder dreiwertigen Metalls ausgewählt ist aus der Gruppe von Calciumaluminat-Hydraten, Calciumaluminatsulfat und deren Mischungen, vorzugsweise Calciumaluminatsulfat ist.

Besonders gute Ergebnisse werden in diesem Zusammenhang erhalten, wenn die anorganische Verbindung eines zwei- oder dreiwertigen Metalls ausgewählt ist aus der Gruppe von Tricalciumaluminat-Hydrat [3 CaO * Al₂O₃ * 6 H₂O bzw. Ca₃Al₂(OH)₁₂], Tetracalciumaluminat-Hydrat [4 CaO * Al₂O₃ * 7 H₂O bzw. Ca₄Al₂(OH)₁₄], Calciumaluminatsulfat [Ettringit, 3 CaO * Al₂O₃ * 3 CaSO₄ * 32 H₂O bzw. Ca₆[Al(OH)₆]₂(SO₄)₂ * 26 H₂O] und deren Mischungen. Besonders gute Ergebnisse werden in diesem Zusammenhang erhalten, wenn die anorganische Verbindung eines zwei- oder dreiwertigen Metalls, ausgewählt ist aus Tetracalciumaluminat-Hydrat, Calciumaluminatsulfat und deren Mischungen.

Im Rahmen der vorliegenden Erfindung wird es besonders bevorzugt, wenn die anorganische Verbindung eines zwei- oder dreiwertigen Metalls Calciumaluminiumsulfat [Ettringit, 3 CaO * Al₂O₃ * 3 CaSO₄ * 32 H₂O bzw. Ca₆[Al(OH)₆]₂(SO₄)₂ * 26 H₂O] ist. Die Summenformel wird abweichend von der oben dargestellten Schreibweise mit 26 Kristallwassermolekülen auch gelegentlich mit 24 Kristallwassermolekülen angegeben. Gemeint ist jedoch stets die gleiche Verbindung.

Calciumaluminiumsulfat wird in Form wässriger Suspensionen kommerziell vertrieben. Calciumaluminatsulfat ist aus dem Mineral Ettringit aufgebaut und enthält einen Calciumoxidanteil von ca. 13,5 Gew-%, einen Aluminiumoxidanteil von ca. 8 Gew.-% und ein Kristallwassergehalt von ca. 45 Gew.-%. Calciumaluminiumsulfat bzw. Ettringit oder seine wässrige Dispersion, wird unter anderem auch vereinzelt als Weißpigment in Bautenfarben und in der Papierbeschichtung eingesetzt. Calciumaluminiumsulfat weist dabei eine hohe Deckkraft sowie ein starkes Absetz- und rasches Trocknungsverhalten auf, so dass es üblicherweise nicht hochkonzentriert in wässrigen Dispersionen, insbesondere in Anstrichmitteln eingesetzt werden kann. Es hat sich im Rahmen der vorliegenden Erfindung jedoch gezeigt, dass Calciumaluminiumsulfat in hervorragender Weise in hochgefüllten wässrigen Dispersionen stabilisiert werden kann, so dass lagerstabile Pigmentpasten mit einer langen offenen Zeit erhalten werden können.

Noch überraschender ist die Tatsache, dass mit Calciumaluminiumsulfat biozid- und konservierungsmittelfreie Pigmentpasten mit einem relativ hohen a_{w}-Wert von bis zu 0,95, erhalten werden können, die lösemittel- und folglich emissionsfrei sind und Farbstärken, Farborte und Brillanzen erzielen, die mit den derzeit verwendeten konservierungsmittel- und biozidhaltigen Standardpigmentpasten vergleichbar sind.

Es hat sich im Rahmen der vorliegenden Erfindung bewährt, wenn die Zusammensetzung die mindestens eine organische oder anorganische, vorzugsweise anorganische, Verbindung eines zwei- oder dreiwertigen Metalls in Mengen von höchstens 10 Gew.-%, insbesondere höchstens 5 Gew.%, vorzugsweise höchstens 3 Gew.-%, bezogen auf die Zusammensetzung, aufweist. Im Rahmen der vorliegenden Erfindung können somit geringe Mengen zwei- und/oder dreiwertiger Metalle in Kombination mit einem a_{w}-Wert von weniger als 0,95 eine hohe Widerstandskraft gegenüber Keimen der erfindungsgemäßen Zusammensetzung bewirken.

Gleichermaßen hat es sich bewährt, wenn die Zusammensetzung die mindestens eine organische oder anorganische, vorzugsweise anorganische, Verbindung eines zwei- oder dreiwertigen Metalls in Mengen von mindestens 0,1 Gew.-%, insbesondere mindestens 0,3 Gew.%, vorzugsweise mindestens 0,5 Gew.-%, bezogen auf die Zusammensetzung, aufweist.

Besonders gute Ergebnisse werden erhalten, wenn die Zusammensetzung die mindestens eine organische oder anorganische, vorzugsweise anorganische, Verbindung eines zwei- oder dreiwertigen Metalls in Mengen von 0,1 bis 10 Gew.-%, insbesondere 0,3 bis 5 Gew.%, vorzugsweise 0,5 bis 3 Gew.-%, bezogen auf die Zusammensetzung, aufweist.

Darüber hinaus hat es sich im Rahmen der vorliegenden Erfindung bewährt, wenn die Zusammensetzung mindestens einen Stoff ausgewählt aus der Gruppe von Aromen, ätherischen Ölen, sekundären Pflanzenstoffen, Carbonsäuren und deren Mischungen aufweist. Die vorgenannten Verbindungsklassen enthalten eine Vielzahl von Stoffen, welche das Wachstum von Mikroorganismen hemmen oder unterdrücken können, ohne dass sie als Biozide gemäß EU-Biozid-Verordnung eingeordnet werden.

Es hat sich bewährt, wenn die Aromen ausgewählt sind aus der Gruppe von Jasmon, Thymol, Guajacol, 2-Phenylethanol, Vanilin, Eugenol, Vanilinsäure, Oleurpein, Terpineolen, Indol, Salicylaldehyd, Phenylethanal, Nerol, Isopulegol, Piperonal, Essigsäureethylester, Geraniol und deren Mischungen. Besonders gute Ergebnisse werden in diesem Zusammenhang erhalten, wenn die Aromen ausgewählt sind aus der Gruppe von Vanilin, Eugenol, Vanilinsäure, Oleurpein und deren Mischungen.

Darüber hinaus hat es sich bewährt, wenn die sekundären Pflanzenstoffe ausgewählt sind aus Phenylpropanoiden, Diarylheptanoiden, Polyphenolen, Alkaloiden, Terpenen und deren Mischungen.

In diesem Zusammenhang werden besonders gute Ergebnisse erhalten, wenn die sekundären Pflanzenstoffe ausgewählt sind aus Hopfenextrakt, Estragol, Curcumin, Dillapiol, Linanool, Terpinolen, Geraniol, Lavandulol, Glucosinolaten, Ipsdienol, Geranial, Anethol, Allylisothiocyanat, Capsaicin, Flavonoiden und deren Mischungen.

Weiterhin hat es sich gleichermaßen bewährt, wenn das ätherische Öl ausgewählt ist aus der Gruppe von Teebaumöl, Gewürznelkenöl, Zimtöl und deren Mischungen. Besonders gute Ergebnisse werden erhalten, wenn das ätherische Öl Teebaumöl ist.

Was nun die Carbonsäuren anbelangt, so können diese aus einer Vielzahl von Carbonsäuren ausgewählt werden. Üblicherweise sind die Carbonsäuren jedoch ausgewählt aus aliphatischen Carbonsäuren, aromatischen Carbonsäuren und deren Mischungen. Besonders gute Ergebnisse werden in diesem Zusammenhang erhalten, wenn die Carbonsäuren ausgewählt sind aus Essigsäure, Oxalsäure, Bernsteinsäure, Zitronensäure, Fumarsäure, Maleinsäure, Salicylsäure, Nicotinsäure, Pyrrolidin-2-carbonsäure, Abietinsäure und deren Mischungen.

Was nun die Menge anbelangt, in welcher Zusammensetzung den mindestens einen Stoff ausgewählt aus der Gruppe von Aromen, ätherischen Ölen, sekundären Pflanzenstoffen, Carbonsäuren und deren Mischungen enthält, so hat es sich bewährt, wenn die Zusammensetzung den mindestens einen Stoff ausgewählt aus der Gruppe von Aromen, ätherischen Ölen, sekundären Pflanzenstoffen, Carbonsäuren in Mengen von höchstens 10 Gew.-%, insbesondere höchstens 5 Gew.%, vorzugsweise höchstens 3 Gew.-%, bezogen auf die Zusammensetzung, aufweist. Im Rahmen der vorliegenden Erfindung können somit geringe Mengen der vorgenannten Stoffe in Kombination mit einem a_{w}-Wert von weniger als 0,95 eine hohe Widerstandskraft gegenüber Keimen der erfindungsgemäßen Zusammensetzung bewirken.

Gleichermaßen hat es sich bewährt, wenn die Zusammensetzung den mindestens einen Stoff ausgewählt aus der Gruppe von Aromen, ätherischen Ölen, sekundären Pflanzenstoffen, Carbonsäuren und deren Mischungen in Mengen von mindestens 0,1 Gew.-%, insbesondere mindestens 0,3 Gew.%, vorzugsweise mindestens 0,5 Gew.-%, bezogen auf die Zusammensetzung, aufweist.

Besonders gute Ergebnisse werden erhalten, wenn die Zusammensetzung den mindestens einen Stoff ausgewählt aus der Gruppe von Aromen, ätherischen Ölen, sekundären Pflanzenstoffen, Carbonsäuren und deren Mischungen in Mengen von 0,1 bis 10 Gew.-%, insbesondere 0,3 bis 5 Gew.%, vorzugsweise 0,5 bis 3 Gew.-%, bezogen auf die Zusammensetzung, aufweist.

Gemäß einer bevorzugten Ausführungsform der vorliegenden Erfindung weist die Zusammensetzung einen a_{w}-Wert von weniger als 0,95 auf, und enthält
(i) mindestens eine Verbindung mit einem hohen Wasserbindungsvermögen,
(ii) gegebenenfalls mindestens eine organische oder anorganische, vorzugsweise anorganische, Verbindung eines zwei- oder dreiwertigen Metalls und
(iii) gegebenenfalls mindestens einen Stoff ausgewählt aus der Gruppe von Aromen, ätherischen Ölen, sekundären Pflanzenstoffen, Carbonsäuren und deren Mischungen,
mit der Maßgabe, dass mindestens eine Verbindung gemäß (ii) oder (iii) in der Zusammensetzung vorhanden ist.

Für diese Ausführungsformen gelten alle Merkmale, Vorteile und Besonderheiten, die zuvor im Zusammenhang mit anderen Ausführungsformen beschrieben wurden, entsprechend.

Im Rahmen der vorliegenden Erfindung werden somit besonders gute Ergebnisse erhalten, wenn die Zusammensetzung einen a_{w}-Wert von weniger als 0,95 aufweist, und
(i) mindestens eine Verbindung mit einem hohen Wasserbindungsvermögen, insbesondere in Mengen von 0,1 bis 30 Gew.-%,
(ii) gegebenenfalls mindestens eine organische oder anorganische, vorzugsweise anorganische, Verbindung eines zwei- oder dreiwertigen Metalls, insbesondere in Mengen von 0,1 bis 10 Gew.-%, und
(iii) gegebenenfalls mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%,
jeweils bezogen auf die Zusammensetzung, enthält, mit der Maßgabe, dass mindestens eine Verbindung gemäß (ii) oder (iii) in der Zusammensetzung vorhanden ist, enthält.

Für diese Ausführungsformen gelten alle Merkmale, Vorteile und Besonderheiten, die zuvor im Zusammenhang mit anderen Ausführungsformen beschrieben wurden, entsprechend.

Weiterhin kann es im Rahmen der vorliegenden Erfindung vorgesehen sein, dass die Zusammensetzung ein Netz- oder Dispergiermittel aufweist. Das Netz- und Dispergiermittel wird dabei vorzugsweise aus den zuvor genannten Netz- und Dispergiermitteln ausgewählt. Auch die Mengen entsprechen vorzugsweise den zuvor genannten Mengen an Netz- oder Dispergiermitteln.

Im Rahmen der vorliegenden Erfindung werden somit besonders gute Ergebnisse erhalten, wenn die Zusammensetzung einen a_{w}-Wert von weniger als 0,95 aufweist, und
(i) mindestens eine Verbindung mit einem hohen Wasserbindungsvermögen, insbesondere in Mengen von 0,1 bis 30 Gew.-%,
(ii) gegebenenfalls mindestens eine organische oder anorganische, vorzugsweise anorganische, Verbindung eines zwei- oder dreiwertigen Metalls, insbesondere in Mengen von 0,1 bis 10 Gew.-%,
(iii) gegebenenfalls mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%, und
(iv) ein Netz- oder Dispergiermittel, insbesondere in Mengen von 1 bis 50 Gew.-%,
jeweils bezogen auf die Zusammensetzung, enthält, mit der Maßgabe, dass mindestens eine Verbindung gemäß (ii) oder (iii) in der Zusammensetzung vorhanden ist.

Für diese Ausführungsformen gelten alle Merkmale, Vorteile und Besonderheiten, die zuvor im Zusammenhang mit anderen Ausführungsformen beschrieben wurden, entsprechend.

Weiterhin kann es im Rahmen der vorliegenden Erfindung vorgesehen sein, dass die Zusammensetzung ein Pigment aufweist. Das Pigment wird dabei vorzugsweise aus den zuvor genannten Pigmenten ausgewählt. Auch die Mengen entsprechen vorzugsweise den zuvor genannten Mengen an Pigmenten.

Im Rahmen der vorliegenden Erfindung werden somit besonders gute Ergebnisse erhalten, wenn die Zusammensetzung einen a_{w}-Wert von weniger als 0,95 aufweist und
(i) mindestens eine Verbindung mit einem hohen Wasserbindungsvermögen, insbesondere in Mengen von 0,1 bis 30 Gew.-%,
(ii) gegebenenfalls mindestens eine organische oder anorganische, vorzugsweise anorganische, Verbindung eines zwei- oder dreiwertigen Metalls, insbesondere in Mengen von 0,1 bis 10 Gew.-%,
(iii) gegebenenfalls mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%,
(iv) ein Netz- oder Dispergiermittel, insbesondere in Mengen von 1 bis 50 Gew.-%, und
(v) ein Pigment, insbesondere in Mengen von 5 bis 85 Gew.-%,
jeweils bezogen auf die Zusammensetzung, enthält, mit der Maßgabe, dass mindestens eine Verbindung gemäß (ii) oder (iii) in der Zusammensetzung vorhanden ist.

Für diese Ausführungsformen gelten alle Merkmale, Vorteile und Besonderheiten, die zuvor im Zusammenhang mit anderen Ausführungsformen beschrieben wurden, entsprechend.

Weiterhin kann es im Rahmen der vorliegenden Erfindung vorgesehen sein, dass die Zusammensetzung ein pH-Stellmittel aufweist. Das pH-Stellmittel wird dabei vorzugsweise aus den zuvor genannten pH-Stellmitteln ausgewählt. Auch die Mengen entsprechen vorzugsweise den zuvor genannten Mengen an pH-Stellmitteln.

Im Rahmen der vorliegenden Erfindung werden somit besonders gute Ergebnisse erhalten, wenn die Zusammensetzung einen a_{w}-Wert von weniger als 0,95 aufweist, und
(i) mindestens eine Verbindung mit einem hohen Wasserbindungsvermögen, insbesondere in Mengen von 0,1 bis 30 Gew.-%,
(ii) gegebenenfalls mindestens eine organische oder anorganische, vorzugsweise anorganische, Verbindung eines zwei- oder dreiwertigen Metalls, insbesondere in Mengen von 0,1 bis 10 Gew.-%,
(iii) gegebenenfalls mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%,
(iv) ein Netz- oder Dispergiermittel, insbesondere in Mengen von 1 bis 50 Gew.-%,
(v) ein Pigment, insbesondere in Mengen von 5 bis 85 Gew.-%, und
(vi) ein pH-Stellmittel, insbesondere in Mengen von 0,1 bis 10 Gew.-%,
jeweils bezogen auf die Zusammensetzung, enthält, mit der Maßgabe, dass mindestens eine Verbindung gemäß (ii) oder (iii) in der Zusammensetzung vorhanden ist, enthält.

Für diese Ausführungsformen gelten alle Merkmale, Vorteile und Besonderheiten, die zuvor im Zusammenhang mit anderen Ausführungsformen beschrieben wurden, entsprechend.

Weiterhin kann es im Rahmen der vorliegenden Erfindung vorgesehen sein, dass die Zusammensetzung ein Additiv aufweist. Das Additiv wird dabei vorzugsweise aus den zuvor genannten Additiven ausgewählt. Auch die Mengen entsprechen vorzugsweise den zuvor genannten Mengen an Additiven.

Im Rahmen der vorliegenden Erfindung werden somit besonders gute Ergebnisse erhalten, wenn die Zusammensetzung einen a_{w}-Wert von weniger als 0,95 aufweist, und
(i) mindestens eine Verbindung mit einem hohen Wasserbindungsvermögen, insbesondere in Mengen von 0,1 bis 30 Gew.-%,
(ii) gegebenenfalls mindestens eine organische oder anorganische, vorzugsweise anorganische, Verbindung eines zwei- oder dreiwertigen Metalls, insbesondere in Mengen von 0,1 bis 10 Gew.-%,
(iii) gegebenenfalls mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%,
(iv) ein Netz- oder Dispergiermittel, insbesondere in Mengen von 1 bis 50 Gew.-%,
(v) ein Pigment, insbesondere in Mengen von 5 bis 85 Gew.-%,
(vi) ein pH-Stellmittel, insbesondere in Mengen von 0,1 bis 10 Gew.-%, und
(vii) ein Additiv, insbesondere in Mengen von 0,01 bis 10 Gew.-%,
jeweils bezogen auf die Zusammensetzung, enthält, mit der Maßgabe, dass mindestens eine Verbindung gemäß (ii) oder (iii) in der Zusammensetzung vorhanden ist.

Für diese Ausführungsform gelten alle Merkmale, Vorteile und Besonderheiten, die zuvor im Zusammenhang mit anderen Ausführungsformen beschrieben wurden, entsprechend.

Wenn die Zusammensetzung mindestens eine organische oder anorganische, vorzugsweise anorganische, Verbindung eines zwei- oder dreiwertigen Metalls und/oder mindestens einen Stoff ausgewählt aus der Gruppe von Aromen, ätherischen Ölen, sekundären Pflanzenstoffen, Carbonsäuren und deren Mischungen enthält, weist die wässrige Zusammensetzung - wie zuvor beschrieben - üblicherweise einen a_{w}-Wert von weniger als 0,95, insbesondere weniger als 0,85, auf. Im besonderen Maße hat es sich gemäß dieser Ausführungsform bewährt, wenn die wässrige Zusammensetzung einen a_{w}-Wert im Bereich von 0,60 bis 0,95, insbesondere 0,65 bis 0,85, insbesondere 0,75 bis 0,85, aufweist.

Weiterer Gegenstand der vorliegenden Erfindung - gemäß einem **zweiten** Aspekt der vorliegenden Erfindung - ist die Verwendung einer zuvor beschriebenen wässrigen Zusammensetzung als Pigmentpaste zur Abtönung von Bindemittelsystemen, insbesondere von Anstrichmitteln, vorzugsweise von Dispersionsfarben.

Das Bindemittelsystem kann dabei eine wasserbasierte Bindemitteldispersion, ein lösemittelhaltiges Bindemittel oder ein 100 %-Feststoffsystem, wie beispielsweise ein Pulverlack oder ein Epoxidharz, sein. 100 %-Feststoffsysteme sind Bindemittelsysteme, die zu 100 % aushärten. 100 %-Feststoffsysteme können flüssig sein, wie beispielsweise Epoxidharze, aber auch fest, wie beispielsweise Pulverlacke.

Das Bindemittelsystem, insbesondere die Abtönbasis bzw. Basiszusammensetzung, ist insbesondere ein vorzugsweise wässriges Bindemittelsystem. Üblicherweise ist die Abtönbasis eine wässrige Dispersion, ein Wasserlack, eine Dispersionsfarbe, eine Kalkfarbe, eine Silikatfarbe, eine Silikonharzfarbe, eine Dispersionssilikatfarbe, eine Sol-Silikatfarbe, eine Acrylatfarbe, eine Styrol-Acrylat-Farbe, eine Alkydharz-Farbe, eine Kasein-Farbe, eine Nanohybridfarbe oder deren Mischung, vorzugsweise eine Dispersionsfarbe. Es kann jedoch auch sein, dass die Abtönbasis eine lösemittelhaltige Dispersion oder ein Lösemittellack ist. Weiterhin ist es möglich, dass die erfindungsgemäße wässrige Zusammensetzung bzw. Pigmentpaste in einem 100 %-Feststoffsystem bzw. 100 %-System - auch All-Solids-System genannt -, wie beispielsweise einem strahlenhärtenden Bindemittel, zugesetzt wird.

Vorzugsweise wird jedoch eine wässrige Abtönbasis eingesetzt, welche bevorzugt lösemittelfrei ist, insbesondere einen VOC-Gehalt von weniger als 1 g/l aufweist.

Wie zuvor ausgeführt, enthält die Abtönbasis üblicherweise ein Bindemittel in wässriger Dispersion. Hierbei kann es vorgesehen sein, dass die Abtönbasis ein organisches Bindemittel in Form einer wässrigen Dispersion eines Polymers enthält. Vorzugsweise ist das Polymer ausgewählt aus Acrylaten, Vinylacetat und/oder Styrol, insbesondere auf Basis von Reinacrylaten und/oder Terpolymeren der genannten Verbindungen, vorzugsweise Reinacrylaten. Gleichermaßen kann jedoch auch ein anorganisches Bindemittel verwendet werden, wie beispielsweise Wasserglas oder Kieselsol oder auch ein Organohybridbindemittel, insbesondere eine wässrige Organosilikat-Hybriddispersion und/oder Stärke und/oder Stärkehybridbindemittel. Gleichermaßen ist es auch möglich, dass Acrylharze, Acrylsilikonharze, Silikonharze, Urethanharze, ungesättigte Polyesterharze oder Alkydharze sowie deren Mischungen eingesetzt werden.

Vorzugsweise weist die Abtönbasis jedoch ein organisches Bindemittel auf. Besonders gute Ergebnisse werden in diesem Zusammenhang erhalten, wenn die Abtönbasis ein Polymer ausgewählt aus Vinylacetat/Ethylen-Copolymeren, Copolymeren auf Basis von Vinylaromaten, insbesondere Styrol und Acrylaten, oder auf Basis von Reinacrylaten, insbesondere auf der Basis von Reinacrylaten, aufweist. Reinacrylate umfassen Homo- und insbesondere Copolymere von (Meth)Acrylaten, d.h. Acrylaten und/oder Methacrylaten, die gegebenenfalls auch mit (Meth)Acrylsäure, d.h. Acryl- und/oder Methacrylsäure als Comonomerbaustein. Das organische Bindemittel wird vorzugsweise wie zuvor ausgeführt in Form einer wässrigen Bindemitteldispersion eingesetzt.

Für weitergehende Einzelheiten zu der erfindungsgemäßen Verwendung kann auf die obigen Ausführungen zu der erfindungsgemäßen Zusammensetzung verwiesen werden, welche in Bezug auf die erfindungsgemäße Verwendung entsprechend gelten.

Weiterer Gegenstand der vorliegenden Erfindung - gemäß einem **dritten** Aspekt der vorliegenden Erfindung - ist ein Kit-of-Parts, enthaltend eine zuvor genannte Zusammensetzung und eine Abtönbasis, insbesondere ein Anstrichmittel, vorzugsweise eine Dispersionsfarbe.

Mit dem erfindungsgemäßen Kit-of-Parts können nahezu beliebige organische und anorganische Bindemittelsysteme konservierungsmittelfrei und biozidfrei in wasserbasierten, vorzugsweise rein wasserbasierten, Systemen erhalten werden.

Das erfindungsgemäße Kit-of-Parts eignet sich insbesondere zur Herstellung konservierungsmittelfreier und biozidfreier Abtönsysteme bzw. abgetönter Anstrichsysteme und für die Herstellung von abgetönten wässrigen Lasuren, Wasserlacken, Anstrichfarben, insbesondere Dispersionsfarben, Kalkfarben, Silikatfarben, Silikonharzfarben, Dispersionsilikatfarben, Sol-Silikatfarben und/oder Nanohydbridfarben. Für weitere Einzelheiten der Abtönbasis wird auf die obigen Ausführungen zu der erfindungsgemäßen Verwendung verwiesen.

Gemäß einer bevorzugten Ausführungsform weist das Bindemittel, insbesondere die Dispersionsfarbe, einen Komplexbildner und/oder einen pH-Stabilisator, auf.

Die Anwesenheit eines Komplexbildners oder eines pH-Stabilisators in der Abtönbasis, insbesondere der Dispersionsfarbe ist insbesondere bevorzugt, wenn die Zusammensetzung eine organische oder anorganische, vorzugsweise anorganische, Verbindung eines zwei- oder dreiwertigen Metalls aufweist. Durch die Anwesenheit drei- und gegebenenfalls auch zweiwertiger Ionen in nicht zu vernachlässigenden Mengen in der erfindungsgemäßen Zusammensetzung, insbesondere Pigmentpaste, wird oftmals eine ungewünschte Eindickung der Bindemittelsysteme beobachtet. Dies kann zuverlässig entweder durch die Zugabe eines Komplexbildners oder oftmals auch eines pH-Stabilisators verhindert werden.

Im Rahmen der vorliegenden Erfindung wird es bevorzugt, wenn die Abtönbasis bzw. Dispersionsfarbe den Komplexbildner und/oder den pH-Stabilisator in Mengen von 0,1 bis 10 Gew.-%, insbesondere 0,2 bis 8 Gew.-%, vorzugsweise 0,5 bis 5 Gew.-%, bezogen auf die Abtönbasis, enthält.

Wenn die Abtönbasis, insbesondere die Dispersionsfarbe, einen Komplexbildner enthält, so hat es sich bewährt, wenn der Komplexbildner ausgewählt ist aus der Gruppe von Phosphonsäuren, Phosphonaten, Polyphosphaten, Hydroxycarbonsäuren, Dicarbonsäuren, Aminosäuren, Porphyrinen und deren Mischungen, vorzugsweise Phosphonsäuren, Phosphonaten und deren Mischungen.

Besonders bevorzugt ist der Komplexbildner ausgwählt aus der Gruppe von HEDP 1-Hydroxy-ethan-(1,1-diphosphonsäure) (HEDP), Pentanatrium-Aminotrimethylenphosphonsäure (Na₅ATMP)), Tetranatrium-Hydroxyethandiphosphonsäure (Na₄HEDP) und deren Mischungen.

Was den pH-Stabilisator anbelangt, so kann dieser aus einer Vielzahl von Systemen ausgewählt werden. Besonders gute Ergebnisse werden im Rahmen der vorliegenden Erfindung jedoch erhalten, wenn der pH-Stabilisator ausgewählt ist aus der Gruppe von pH-Puffersystemen, insbesondere basischen pH-Puffersystemen.

Für weitere Einzelheiten zu dem erfindungsgemäßen Kit-of-Parts kann auf die obigen Ausführungen zu den anderen Erfindungsaspekten verwiesen werden, welche in Bezug auf das erfindungsgemäße Kit-of-Parts entsprechend gelten.

Wiederum weiterer Gegenstand der vorliegenden Erfindung - gemäß einem **vierten** Aspekt der vorliegenden Erfindung - ist eine Zusammensetzung, insbesondere ein Halbfabrikat und/oder ein Vorprodukt, zur Herstellung einer zuvor genannten Zusammensetzung, insbesondere Pigmentpaste, wobei die Zusammensetzung einen a_{w}-Wert von weniger als 0,95 aufweist.

Die Zusammensetzung gemäß diesem Aspekt der vorliegenden Erfindung ist vorzugsweise frei von Pigmenten. Weiterhin ist die Zusammensetzung gemäß diesem Aspekt der Erfindung vorzugsweise frei von Füllstoffen. Des Weiteren ist die Zusammensetzung gemäß diesem Aspekt der Erfindung vorzugsweise frei von Netz- und Dispergiermitteln.

Diese weitere erfindungsgemäße Zusammensetzung, insbesondere das Halbfabrikat bzw. Vorprodukt, ermöglicht eine einfache Abmischung von Pigmentpasten bei den Herstellern von Pigmentpasten, welche dann für die jeweiligen Systeme und Maschinen optimiert ist. Der weiteren erfindungsgemäßen Zusammensetzung müssen lediglich noch Pigment sowie Netzmittel und gegebenenfalls Füllstoffe hinzugegeben werden, um zu der zuvor beschriebenen wässrigen Zusammensetzung, insbesondere Pigmentpaste, zu gelangen.

Besonders gute Ergebnisse werden im Rahmen der vorliegenden Erfindung erhalten, wenn die weitere Zusammensetzung die Verbindung mit hohem Wasserbindungsvermögen, in Mengen von 5 bis 50 Gew.-%, insbesondere 7 bis 40 Gew.-%, vorzugsweise 10 bis 30 Gew.-%, bezogen auf die Zusammensetzung, aufweist.

Gleichermaßen kann es im Rahmen der vorliegenden Erfindung vorgesehen sein, dass die weitere Zusammensetzung Wasser in Mengen von 5 bis 75 Gew.-%, insbesondere 10 bis 60 Gew.-%, vorzugsweise 15 bis 50 Gew.-%, bevorzugt 20 bis 35 Gew.-%, bezogen auf die Zusammensetzung, aufweist.

Darüber hinaus kann es vorgesehen sein, dass die Zusammensetzung ein Additiv aufweist.

Wenn die Zusammensetzung ein Additiv aufweist, so werden gute Ergebnisse erhalten, wenn die Zusammensetzung das Additiv in Mengen 0,05 bis 10 Gew.-%, insbesondere 0,1 bis 7 Gew.-%, vorzugsweise 0,1 bis 5 Gew.-%, bevorzugt 0,2 bis 3 Gew.-%, bezogen auf die Zusammensetzung, enthält.

Gleichermaßen kann es im Rahmen der vorliegenden Erfindung vorgesehen sein, dass die weitere Zusammensetzung ein pH-Stellmittel aufweist. Wenn die weitere Zusammensetzung ein pH-Stellmittel aufweist, so hat es sich bewährt, wenn die Zusammensetzung das pH-Stellmittel in Mengen von 0,01 bis 10 Gew.-%, insbesondere 0,1 bis 8 Gew.-%, vorzugsweise 0,5 bis 7 Gew.-%, bevorzugt 1 bis 6 Gew.-%, bezogen auf die Zusammensetzung, aufweist.

Wie schon im Zusammenhang mit der erfindungsgemäßen wässrigen Zusammensetzung, insbesondere Pigmentpaste, ausgeführt, werden gute Ergebnisse werden im Rahmen der vorliegenden Erfindung erhalten, wenn die Zusammensetzung einen a_{w}-Wert von weniger als 0,85, insbesondere weniger als 0,75, vorzugsweise weniger 0,65, bevorzugt weniger als 0,60 aufweist.

Gleichermaßen kann es im Rahmen der vorliegenden Erfindung vorgesehen sein, dass die Zusammensetzung einen a_{w}-Wert im Bereich von 0,01 bis 0,95, insbesondere 0,01 bis 0,85, vorzugsweise 0,01 bis 0,75, bevorzugt 0,02 bis 0,65, besonders bevorzugt 0,02 bis 0,60, aufweist.

Wenn die erfindungsgemäße Zusammensetzung keine weiteren Stoffe aufweist, welche das Wachstum von Mikroorganismen, insbesondere von Bakterien, Hefen und Schimmelpilzen, hindern bzw. hemmen oder verlangsamen, weist die wässrige Zusammensetzung vorzugsweise einen a_{w}-Wert von weniger als 0,75, auf, vorzugsweise weniger als 0,65, bevorzugt weniger als 0,6, auf. Gleichermaßen ist es gemäß dieser bevorzugten Ausführungsform der vorliegenden Erfindung vorzugsweise vorgesehen, dass die Zusammensetzung einen a_{w}-Wert im Bereich von 0,01 bis 0,75, vorzugsweise 0,02 bis 0,65, bevorzugt 0,02 bis 0,60, aufweist.

Für den Fall, dass die erfindungsgemäße wässrige Zusammensetzung einen weiteren Stoff aufweist, welcher das Wachstum von Mikroorganismen hemmt bzw. stört bzw. unterdrückt, insbesondere mindestens eine organische oder anorganische, vorzugsweise anorganische, Verbindung eines zwei- oder dreiwertigen Metalls und/oder mindestens einen Stoff ausgewählt aus der Gruppe von Aromen, ätherischen Ölen, sekundären Pflanzenstoffen, Carbonsäuren und deren Mischungen, insbesondere in von Mengen 0,1 bis 10 Gew.-%, enthält, kann der gesamte oben genannte Bereich bis zu einem a_{w}-Wert von 0,95 ausgeschöpft werden. Besonders bevorzugt wird es in diesem Zusammenhang jedoch, wenn die wässrige Zusammensetzung einen a_{w}-Wert von weniger als 0,95, insbesondere weniger als 0,85, aufweist. Im besonderen Maße hat es sich gemäß dieser Ausführungsform bewährt, wenn die wässrige Zusammensetzung einen a_{w}-Wert im Bereich von 0,60 bis 0,95, insbesondere 0,65 bis 0,85, insbesondere 0,75 bis 0,85, aufweist.

Wenn die Zusammensetzung mindestens eine organische oder anorganische, vorzugsweise anorganische, Verbindung eines zwei- oder dreiwertigen Metalls enthält, in Mengen von höchstens 10 Gew.-%, insbesondere höchstens 5 Gew.%, vorzugsweise höchstens 3 Gew.-%, bezogen auf die Zusammensetzung, aufweist. Im Rahmen der vorliegenden Erfindung können somit geringe Mengen zwei- und/oder dreiwertiger Metalle in Kombination mit einem a_{w}-Wert von weniger als 0,95 eine hohe Widerstandskraft gegenüber Keimen der erfindungsgemäßen Zusammensetzung bewirken.

Gleichermaßen hat es sich bewährt, wenn die Zusammensetzung die mindestens eine organische oder anorganische, vorzugsweise anorganische, Verbindung eines zwei- oder dreiwertigen Metalls in Mengen von mindestens 0,1 Gew.-%, insbesondere mindestens 0,3 Gew.%, vorzugsweise mindestens 0,5 Gew.-%, bezogen auf die Zusammensetzung, aufweist.

Besonders gute Ergebnisse werden erhalten, wenn die Zusammensetzung die mindestens eine organische oder anorganische, vorzugsweise anorganische, Verbindung eines zwei- oder dreiwertigen Metalls in Mengen von 0,1 bis 10 Gew.-%, insbesondere 0,3 bis 5 Gew.%, vorzugsweise 0,5 bis 3 Gew.-%, bezogen auf die Zusammensetzung, aufweist.

Wenn die Zusammensetzung mindestens einen Stoff ausgewählt aus der Gruppe von Aromen, ätherischen Ölen, sekundären Pflanzenstoffen, Carbonsäuren und deren Mischungen enthält, so hat es sich bewährt, wenn die Zusammensetzung den mindestens einen Stoff ausgewählt aus der Gruppe von Aromen, ätherischen Ölen, sekundären Pflanzenstoffen, Carbonsäuren in Mengen von höchstens 10 Gew.-%, insbesondere höchstens 5 Gew.%, vorzugsweise höchstens 3 Gew.-%, bezogen auf die Zusammensetzung, aufweist.

Gleichermaßen hat es sich bewährt, wenn die Zusammensetzung den mindestens einen Stoff ausgewählt aus der Gruppe von Aromen, ätherischen Ölen, sekundären Pflanzenstoffen, Carbonsäuren und deren Mischungen in Mengen von mindestens 0,1 Gew.-%, insbesondere mindestens 0,3 Gew.%, vorzugsweise mindestens 0,5 Gew.-%, bezogen auf die Zusammensetzung, aufweist.

Besonders gute Ergebnisse werden erhalten, wenn die Zusammensetzung den mindestens einen Stoff ausgewählt aus der Gruppe von Aromen, ätherischen Ölen, sekundären Pflanzenstoffen, Carbonsäuren und deren Mischungen in Mengen von 0,1 bis 10 Gew.-%, insbesondere 0,3 bis 5 Gew.%, vorzugsweise 0,5 bis 3 Gew.-%, bezogen auf die Zusammensetzung, aufweist.

Für weitere Einzelheiten zu dieser weiteren erfindungsgemäßen Zusammensetzung kann auf die obigen Ausführungen zu den anderen Erfindungsaspekten verwiesen werden, welche in Bezug auf die weitere erfindungsgemäße Zusammensetzung entsprechend gelten.

## Patentansprüche

1. Wässrige Zusammensetzung, insbesondere Pigmentpaste für ein Abtönsystem,
**dadurch gekennzeichnet,**
**dass** die wässrige Zusammensetzung einen a_{w}-Wert von weniger als 0,95 aufweist.

2. Wässrige Zusammensetzung nach Anspruch 1, **dadurch gekennzeichnet, dass** die Zusammensetzung einen a_{w}-Wert von weniger als 0,85, insbesondere weniger als 0,75, vorzugsweise weniger 0,65, bevorzugt weniger als 0,60, aufweist.

3. Wässrige Zusammensetzung nach Anspruch 1 oder 2, **dadurch gekennzeichnet, dass** die Zusammensetzung mindestens eine Verbindung mit hohem Wasserbindungsvermögen aufweist.

4. Wässrige Zusammensetzung nach Anspruch 3, **dadurch gekennzeichnet, dass** die Verbindung mit hohem Wasserbindungsvermögen ausgewählt ist aus der Gruppe bestehend aus Sacchariden, insbesondere Monosacchariden, Disacchariden und Polysacchariden, Polyglykolen, Zeolithen, Zuckeralkoholen, anorganischen Schichtsilikaten, Polyacrylaten, Acrylsäurecopolymeren, HEUR, Polyurethanverdickern, kolloidaler Kieselsäure, harnstoff- und/oder polyamidbasierten Rheologiemodifizierern und deren Mischungen, bevorzugt Polysacchariden, Polyglykolen, Zeolithen, Zuckeralkoholen, Acrylsäurecopolymeren und deren Mischungen.

5. Wässrige Zusammensetzung nach Anspruch 3 oder 4, **dadurch gekennzeichnet, dass** die Verbindung mit hohem Wasserbindungsvermögen ausgewählt ist aus der Gruppe von Dextrose, Mannose, Fructose, Galaktose, Cellulose, Cellulosederivaten, Pektin, Lignin, Lingninderivaten, Polyethylenglykol, Polypropylenglykol, Zeolithen, Mannit, Isomalt, Lactit, Sorbit, Xylit, Threit, Erythrit, Arabit, Acrylsäurecopolymeren und deren Mischungen.

6. Wässrige Zusammensetzung nach einem der Ansprüche 3 bis 5, **dadurch gekennzeichnet, dass** die Zusammensetzung die Verbindung mit hohem Wasserbindungsvermögen in Mengen von bis zu 30 Gew.-%, insbesondere bis zu 20 Gew.-%, vorzugsweise bis zu 15 Gew.-%, bevorzugt bis zu 12 Gew.-%, bezogen auf die Zusammensetzung, aufweist.

7. Wässrige Zusammensetzung nach einem der vorangehenden Ansprüche, **dadurch gekennzeichnet, dass** die Zusammensetzung einen pH-Wert von 9,5 oder höher aufweist, insbesondere einen pH-Wert im Bereich von 9,5 bis 14, vorzugsweise 9,5 bis 13, bevorzugt 9,5 bis 12, besonders bevorzugt 9,5 bis 11,5, ganz besonders bevorzugt 10,2 bis 11,4, aufweist.

8. Wässrige Zusammensetzung nach einem der vorangehenden Ansprüche, **dadurch gekennzeichnet, dass** die Zusammensetzung ein Netz- oder Dispergiermittel aufweist, insbesondere wobei die Zusammensetzung das Netz- oder Dispergiermittel in Mengen von 1 bis 50 Gew.-%, insbesondere 3 bis 45 Gew.-%, vorzugsweise 5 bis 40 Gew.-%, bevorzugt 8 bis 35 Gew.-%, bezogen auf die Zusammensetzung, enthält.

9. Wässrige Zusammensetzung nach einem der vorangehenden Ansprüche, **dadurch gekennzeichnet, dass** die Zusammensetzung ein Pigment aufweist, insbesondere wobei das Pigment ausgewählt ist aus der Gruppe von organischen Pigmenten, anorganischen Pigmenten und deren Mischungen.

10. Wässrige Zusammensetzung nach Anspruch 9, **dadurch gekennzeichnet, dass** die Zusammensetzung das Pigment in Mengen von 5 bis 85 Gew.-%, insbesondere 6 bis 80 Gew.-%, vorzugsweise 8 bis 75 Gew.-%, bevorzugt 10 bis 70 Gew.-%, bezogen auf die Zusammensetzung, enthält.

11. Wässrige Zusammensetzung nach einem der vorangehenden Ansprüche, **dadurch gekennzeichnet, dass** die Zusammensetzung insbesondere zumindest im Wesentlichen frei ist von Konservierungsmitteln und/oder dass die Zusammensetzung insbesondere zumindest im Wesentlichen frei ist von Bioziden.

12. Wässrige Zusammensetzung nach einem der vorangehenden Ansprüche, **dadurch gekennzeichnet, dass** die Zusammensetzung mindestens eine organische oder anorganische, vorzugsweise anorganische, Verbindung eines zwei- oder dreiwertigen Metalles aufweist.

13. Wässrige Zusammensetzung nach Anspruch 12, **dadurch gekennzeichnet, dass** die Zusammensetzung die organische oder anorganische, vorzugsweise anorganische, Verbindung eines zwei- oder dreiwertigen Metalls in Mengen von 2 bis 20 Gew.-%, insbesondere 5 bis 15 Gew.-%, vorzugsweise 6 bis 13 Gew.-%, bevorzugt 7 bis 10 Gew.-%, bezogen auf die Zusammensetzung, aufweist.

14. Wässrige Zusammensetzung nach einem der vorangehenden Ansprüche, **dadurch gekennzeichnet, dass** die Zusammensetzung mindestens einen Stoff ausgewählt aus der Gruppe von Aromen, ätherischen Ölen, sekundären Pflanzenstoffen, Carbonsäuren und deren Mischungen aufweist.

15. Wässrige Zusammensetzung nach Anspruch 14, **dadurch gekennzeichnet, dass** die Zusammensetzung den mindestens einen Stoff ausgewählt aus der Gruppe von Aromen, ätherischen Ölen, sekundären Pflanzenstoffen, Carbonsäuren und deren Mischungen in Mengen von 0,1 bis 10 Gew.-%, insbesondere 0,3 bis 5 Gew.%, vorzugsweise 0,5 bis 3 Gew.-%, bezogen auf die Zusammensetzung, aufweist.

16. Verwendung einer wässrigen Zusammensetzung nach einem der Ansprüche 1 bis 15 als Pigmentpaste zur Abtönung von Bindemittelsystemen, insbesondere von Anstrichmitteln, vorzugsweise von Dispersionsfarben.

17. Kit-of-Parts enthaltend eine Zusammensetzung nach einem der Ansprüchen 1 bis 15 und eine Abtönbasis, insbesondere ein Anstrichmittel, vorzugsweise eine Dispersionsfarbe.

18. Kit-of-Parts nach Anspruch 17, **dadurch gekennzeichnet, dass** die Abtönbasis einen Komplexbildner und/oder einen pH-Stabilisator enthält, insbesondere wobei die Abtönbasis den Komplexbildner und/oder den pH-Stabilisator in Mengen von 0,1 bis 10 Gew.-%, insbesondere 0,2 bis 8 Gew.-%, vorzugsweise 0,5 bis 5 Gew.-%, bezogen auf die Dispersionsfarbe, enthält.

19. Zusammensetzung, insbesondere Halbfabrikat und/oder Vorprodukt, zur Herstellung einer Zusammensetzung, insbesondere Pigmentpaste, nach einem der Ansprüche 1 bis 15, **dadurch gekennzeichnet, dass** die Zusammensetzung einen a_{w}-Wert von weniger als 0,95 aufweist.

20. Zusammensetzung nach Anspruch 19, **dadurch gekennzeichnet, dass** die Zusammensetzung die anorganische Verbindung eines dreiwertigen Metalls in Verbindung mit hohem Wasserbindungsvermögen in Mengen von 5 bis 50 Gew.-%, insbesondere 7 bis 40 Gew.-%, vorzugsweise 10 bis 30 Gew.-%, bezogen auf die Zusammensetzung, aufweist.
